# EUROPÄISCHE PATENTSCHRIFT

(11) **EP 3 913 758 B1**
(45) Veröffentlichungstag und Bekanntmachung des Hinweises auf die Patenterteilung: **07.01.2026**
(21) Anmeldenummer: 21174456.0
(22) Anmeldetag: 18.05.2021
(51) Int. Cl.: H02G 3/12

(54) **HOHLWANDDOSE**
HOLLOW WALL BOX
BOÎTE POUR MURS CREUX

(30) Priorität: 19.05.2020 DE 102020113550
(43) Veröffentlichungstag der Anmeldung: 24.11.2021
(73) Patentinhaber: Kaiser GmbH & Co. KG, 58579 Schalksmühle (DE)
(72) Erfinder: KAISER, Burkard, 58509 Lüdenscheid (DE)
(74) Vertreter: Rentsch Partner AG

(56) Entgegenhaltungen:
- EP-A1- 0 818 864
- EP-B1- 0 818 864
- FR-A1- 2 886 777
- FR-A1- 3 000 309
- FR-A1- 3 011 139
- FR-B1- 2 886 777

## Beschreibung

Die vorliegende Erfindung betrifft eine Hohlwanddose zur Montage von elektrotechnischen Installationen in einer Hohlwand.

Im Stand der Technik ist bekannt, in Wände, Hohlwände oder auch in eine wärmegedämmte Wandung oder Fassade von Gebäuden Elektroinstallationen einzubringen. Insbesondere bei Hohlwänden aber auch bei anderen Wandungen oder Fassaden ist es üblich, hinter der entsprechenden Wandung oder in einem Hohlraum hinter der Hohlwand elektrische Kabel zuzuführen, die in bestimmten Bereichen aus der Wand herausgeführt werden. In diesen Bereichen werden Hohlwanddosen angeordnet, um beispielsweise Schalter, Steckdosen oder ähnliche Installationselemente anzubringen. Beispielsweise wird vor einer Gebäudewand mit Abstand eine ein- oder mehrschichtige Hohlwand aus Holzplatten oder einer Kombination von Gipskartonplatten und Holzplatten angebracht. Um in eine solche Wandung eine Hohlwanddose einzubringen, wird mit einem geeigneten Werkzeug eine Wandöffnung in die Hohlwand eingebracht. In eine solche Wandöffnung wird eine Hohlwanddose eingesetzt, die dann rückseitig mit verlegten elektrischen Kabeln verbunden werden kann.

Zur Befestigung solcher Hohlwanddosen sind Haltevorrichtungen bekannt, welche vorderseitig der Hohlwanddose mittels Stellglieder betätigt werden können, um die Haltevorrichtung gegen die Rückseite der Hohlwand anzuziehen und die Hohlwanddose in der Wandöffnung zu fixieren. Nachteilig an solchen bekannten Ausführungen ist die aufwendige Montage der Haltevorrichtungen.

Aus dem Stand der Technik sind beispielsweise Hohlwanddosen aus FR 2 886 777 A1, FR 3 000 309 A1 und FR 3 011 139 A1 bekannt.

Eine Aufgabe der Erfindung besteht darin eine Hohlwanddose bereitzustellen, welche einfach und schnell montiert werden kann.

Eine Hohlwanddose gemäss der Erfindung ist für elektrotechnische Zwecke geeignet und umfasst einen Dosenkörper und mindestens ein, vorzugsweise zwei gegenüberliegende, Spannelemente zur Befestigung der Hohlwanddose in einer Wandöffnung einer Hohlwand. Der Dosenkörper umfasst einen Dosenboden und eine in den Dosenboden übergehende und sich in eine axiale Richtung erstreckende im Wesentlichen röhrenförmige Seitenwand, welche einen Installationsraum bilden. Dem Dosenboden gegenüberliegend und von der Seitenwand umgeben ist eine Installationsöffnung angeordnet.

In einem montierten Zustand des mindestens einen Spannelementes an dem Dosenkörper ist dieses entlang der Seitenwand in axialer Richtung verschiebbar angeordnet. Das Spannelement kann in oder an einer Nut der Seitenwand angeordnet sein, die sich in die axiale Richtung erstreckt. Mit Vorteil ist das mindestens eine Spannelement an der Aussenseite, insbesondere in einer Nut an der Aussenseite, der Seitenwand verschiebbar angeordnet. Jedoch sind auch andere Ausgestaltungen denkbar. Mit Vorteil ist das Spannelement mittels einer Linearführung in axialer Richtung verschiebbar angeordnet. Je nach Ausgestaltung kann die Linearführung in der Nut angeordnet sein. Beispielsweise können in der Nut auf gegenüberliegenden Seiten der Nut Führungsschienen vorgesehen sein, welche je im montierten Zustand des Spannelementes mit mindestens einem Führungselement des Spannelements wirkverbunden sind. Auf dem mindestens einen verschiebbaren Spannelement ist weiter mindestens ein Halteelement angeordnet, welches zum Abstützen der Hohlwanddose an einer Rückseite der Hohlwand dient. Das mindestens eine Halteelement kann integral mit dem Spannelement verbunden sein. Mit Vorteil sind mehrere Halteelemente auf dem mindestens einen Spannelement angeordnet. Diese können in axialer Richtung hintereinander angeordnet sein. Das mindestens eine Spannelement kann über ein Stellglied, wie z.B. eine Schraube oder ähnliches, in die axiale Richtung verschoben werden. Auf diese Weise kann das mindestens eine darauf angeordnete Halteelement die Hohlwanddose rückseitig gegen die Hohlwand verspannen.

Bei der Montage wird die Hohlwanddose in der Wandöffnung der Hohlwand eingebaut. Hierzu kann die Hohlwanddose mit dem Dosenboden voran in die Wandöffnung gesteckt werden bis diese mit einem Rand vorderseitig auf der Hohlwand aufliegt. Der Rand kann von einem Ende Seitenwand abstehen und dient zur vorderseitigen Auflage an der Hohlwand. In der Regel ist der Rand an der Installationsöffnung angeordnet und umgibt diese zumindest teilweise. In dem montierten Zustand des Spannelementes an dem Dosenkörper ist dieses in axialer Richtung innerhalb einer Montagekontur der Hohlwanddose angeordnet. Diese korrespondiert im Wesentlichen mit der Kontur der Wandöffnung. Die Montagekontur wird in diesem Fall im Wesentlichen von der röhrenförmigen Seitenwand definiert, respektive gebildet. Wenn eine Nut vorhanden ist, liegt diese innerhalb der Montagekontur. Die Montagekontur ist mit Vorteil rund. Je nach Anwendung sind jedoch grundsätzlich auch andere Konturformen denkbar. Das mindestens eine auf dem Spannelement angeordnete Halteelement ragt aus der Montagekontur, insbesondere aus der Nut, radial heraus.

Beim Einbau, respektive beim Einstecken der Hohlwanddose in die Wandöffnung, kann sich das mindestens eine Halteelement mit Vorteil vorrübergehend in die Montagekontur verformen und sich nach der Passage der Wandöffnung hinter der Hohlwand wieder aufstellen. Das Halteelement kann anschliessend über das Stellglied (z.B. eine Schraube oder ähnliches) rückseitig an die Hohlwand angezogen werden um die Hohlwanddose in der Wandöffnung zu befestigen. Für das Anziehen des Spannelementes weist dieses eine Öffnung in die axiale Richtung für das Stellglied auf. Das Stellglied ist mit Vorteil derart in der Öffnung des Spannelements angeordnet, dass dieses in axialer Richtung mehrheitlich (insbesondere über 80% einer Länge des Stellgliedes) elektrisch isoliert ist. Im Fall einer Schraube als Stellglied kann diese beispielsweise mit Ausnahme des Schraubenkopfes entlang der Länge der Schraube von dem Spannelement umgeben und elektrisch isoliert sein.

Wie oben beschrieben, ist das mindestens eine Halteelement deformierbar ausgestaltet. Die Halteelemente können so zumindest temporär in die Montagekontur, insbesondere in die Nut, deformierbar sein. In einem nicht deformierten Zustand stehen die Halteelemente jedoch vorteilhafterweise formstabil von dem Spannelement ab, insbesondere aus der Nut und/oder der Montagekontur heraus. Das mindestens eine Halteelement kann mindestens einen Gelenkbereich für die Deformation aufweisen. Alternativ oder in Ergänzung kann das mindestens eine Halteelement dünnwandig ausgestaltet sein. Alternativ oder in Ergänzung kann das mindestens eine Halteelement zudem eine taschenartige Vertiefung aufweisen. Hierbei kann ein Volumen der taschenartigen Vertiefung in dem deformierten Zustand des Halteelementes verringert werden um die Deformation zu unterstützen. Vorteilhafterweise weist das mindestens eine Halteelement eine Keilform auf. Das mindestens eine keilförmige Halteelement kann sich (im montierten Zustand des Spannelementes) in Richtung des Dosenbodens zuspitzen. Die taschenartige Vertiefung kann sich in diesem Fall in Richtung der Installationsöffnung öffnen. Die taschenartige Vertiefung kann zumindest teilweise von einer Oberkante des Halteelementes umgeben sein, welche zur rückseitigen Auflage an der Hohlwand dient. Mit Vorteil weist ein jeweiliges Halteelement mit der taschenartigen Vertiefung zwei gegenüberliegende Gelenkbereiche auf, welche ein Zuklappen der taschenartigen Vertiefung unterstützen. Die gegenüberliegenden Gelenkbereiche können je an zwei Seitenflächen des Halteelementes angeordnet sein. Die Seitenflächen können eine dreieckige Form haben. Zwischen den gegenüberliegenden Gelenkbereichen, insbesondere den Seitenflächen, kann eine Frontseite angeordnet sein. Die Frontseite steht im montierten Zustand des Spannelementes schräg zu der Seitenwand des Dosenkörpers und dient zum Abgleiten an der Wandöffnung bei der Montage der Hohlwanddose in der Wandöffnung, sodass die Deformation des Halteelements in die Montagekontur unterstützt wird.

Die Montage der Hohlwanddose kann vereinfacht werden, wenn die Hohlwanddose während des rückseitigen Anziehens des Spannelementes möglichst stabil in der Wandöffnung gehalten wird. Hierzu kann die Hohlwanddose ein elastisches und/oder federndes Deformationselement umfassen, welches das Spannelement mit dem Dosenkörper wirkverbindet. Das Deformationselement ist in die axiale Richtung elastisch streckbar und/oder komprimierbar. Mit Vorteil ist das Spannelement an das Deformationselement angeformt. Hierfür kann das Deformationselement einen weichelastischen Deformationsbereich umfassen. Über diesen kann das Spannelement (in Relation zu dem Dosenkörper) in die axiale Richtung elastisch auslenkbar sein. Alternativ oder ergänzend kann das Deformationselement ebenfalls ein Federelement (wie z.B. eine Spiralfeder oder ähnliches) umfassen. Das Federelement kann Metall und/oder Kunststoff, insbesondere einen Hartkunststoff, umfassen.

Das mindestens eine Spannelement kann (in dem montierten Zustand des Spannelementes an dem Dosenkörper) von einer Ruheposition elastisch in eine Vorspannposition ausgelenkt werden. In der Vorspannposition verbleibt das Spannelement in der Regel nur unter Aufbringung einer Vorspannkraft. Bei der Montage kann die Hohlwanddose zunächst in die Wandöffnung eingeführt werden, bis diese mit dem Rand vorderseitig an der Hohlwand aufliegt. Anschliessend kann das Spannelement unter Aufbringung einer Vorspannkraft mit dem darauf angeordneten Halteelement(en) elastisch von der Ruheposition in die eine ausgelenkte Vorspannposition verschoben werden, bei der das mindestens eine Halteelement hinter der Hohlwand ist. Wenn die aufgebrachte Vorspannkraft wegfällt, greift das Halteelement rückseitig hinter die Hohlwand und verspannt die Hohlwanddose gegen die Hohlwand. In dieser vorgespannten Position der Hohlwanddose an der Hohlwand kann das Stellglied problemlos und einfach bedient werden. Durch das zusätzliche Anziehen des Stellgliedes kann das Spannelement dann weiter verspannt werden bis die Hohlwanddose fest in der Wandöffnung montiert ist. Mit Vorteil ist die Vorspannkraft auf das Deformationselement durch das Stellglied aufbringbar. Beispielsweise kann auf das Stellglied mit einem Finger gedrückt werden.

Das Deformationselement kann im montierten Zustand des Spannelementes an dem Dosenkörper mit dem Dosenkörper wirkverbunden sein, insbesondere kann ein erster Wirkverbindungsbereich des Deformationselements mit einem zweiten Wirkverbindungsbereich des Dosenkörpers wirkverbunden sein. Beispielsweise kann das Deformationselement rastend mit dem Dosenkörper wirkverbunden werden. Je nach Ausgestaltung kann die Wirkverbindung ein Hinterschnitt in axialer Richtung zwischen dem ersten und dem zweiten Wirkverbindungsbereich sein. Für eine stabile Verbindung ist es von Vorteil, wenn der erste Wirkverbindungsbereich des Deformationselementes (zumindest bereichsweise) aus Hartplastik besteht. Beispielsweise kann das Deformationselement einen Absatz aufweisen, welcher hinter eine korrespondierende Schulter, angeordnet am Dosenkörper, eingreift (oder vice versa). Die Schulter kann in der Nut des Dosenkörpers angeordnet sein.

Nach der Montage der Hohlwanddose an der Hohlwand können Elektroinstallationen in der Hohlwanddose angeschlossen werden. Zum Einführen von Elektroleitungen (wie zum Beispiel Elektrorohre, o.ä.) kann die Hohlwanddose mindestens eine Einführöffnung aufweisen. Diese ist jedoch mit Vorteil von einer weichelastischen Membran oder einem heraustrennbaren Bereich verschlossen. Zur Montage der Elektroinstallationen kann diese geöffnet/ durchtrennt werden, sodass die Einführöffnung (zumindest teilweise) freigegeben wird. Die weichelastische Membran und/oder das Deformationselement umfassen mit Vorteil einen weichelastischen Kunststoff. Das weichelastische Kunststoffmaterial kann ein Spritzguss-Material sein. Ebenfalls kann der Dosenkörper ein Spritzguss-Material, wie ein HartKunststoff, umfassen. Auf diese Weise kann die Hohlwanddose durch ein Spritzgussverfahren, insbesondere ein Zwei-Komponenten Spritzgussverfahren, hergestellt werden.

Für die Befestigung eines Installationselementes, wie z.B. einen Steckdoseneinsatz, einer Blende oder ähnliches, kann die Hohlwanddose zudem mindestens eine Öffnung für ein Befestigungselement, beispielsweise für eine Befestigungsschraube oder ähnliches, aufweisen. Wie oben beschrieben, weist das mindestens eine Spannelement zudem eine Öffnung für ein Stellglied in axialer Richtung auf. Je nach Anwendung kann das Stellglied für das Spannelement gleichzeitig als Befestigungselement dienen. Das Stellglied kann eine Schraube sein.

Für eine einfache Demontage kann vorgesehen sein, dass die elastische Vorspannung, aufgebracht durch das Deformationselement, lösbar ist. Hierzu kann die Wirkverbindung, wie beispielsweise der Hinterschnitt, des Deformationselementes mit dem Dosenkörper auflösbar sein. Z.B. kann der zweite Wirkverbindungsbereich des Dosenkörpers abtrennbar und/oder verschiebbar ausgestaltet sein. Der zweite Wirkverbindungsbereich kann in der Nut angeordnet sein, insbesondere an einem oberen Ende der Nut angrenzend an den Rand des Dosenkörpers. In einer Ausführungsform kann der zweite Wirkverbindungsbereich über mindestens eine Trennstelle und/oder mindestens einen Verformungsbereich mit dem (restlichen) Dosenkörper wirkverbunden sein. Die Trennstelle(n) und/oder die Verformungsbereich(e) können bewirken, dass der zweite Wirkverbindungsbereich in Relation zu dem ersten Wirkverbindungsbereich verschiebbar oder heraustrennbar ist. Beispielsweise kann der zweite Wirkverbindungsbereich in den Installationsraum auslenkbar sein, sodass die Wirkverbindung des ersten und des zweiten Wirkverbindungsbereiches aufgelöst wird. Beispielsweise können seitlich neben dem zweiten Wirkverbindungsbereich zwei Schlitze angeordnet sein, welche über einen an einem unteren Ende des zweiten Wirkverbindungsbereiches angeordneten Verformungsbereich verbunden sind. Der zweite Wirkverbindungsbereich kann so in den Installationsraum ausgelenkt werden. Alternativ oder ergänzend kann der zweite Wirkverbindungsbereich über eine Dünnstelle von dem (restlichen) Dosenkörper abtrennbar ausgestaltet sein. Der zweite Wirkverbindungsbereich kann ergänzend eine Werkzeugöffnung umfassen, in welche ein Werkzeug eingreifen kann um den zweiten Wirkverbindungsbereich in Relation zu dem (restlichen) Dosenkörper zu verschieben und/oder abzutrennen.

In einer Variante der Erfindung kann das mindestens eine Spannelement für die Montage oder die Demontage alternativ oder ergänzend um eine Rotationsachse rotierbar sein. Die Rotationsachse erstreckt sich mit Vorteil in die axiale Richtung. Auf diese Weise kann das mindestens eine Halteelement in einem rotierten Zustand des Spannelements innerhalb der Montagekontur, respektive innerhalb der Nut, angeordnet sein. In dem rotierten Zustand des Spannelements kann die Hohlwanddose einfach aus der Einbauöffnung herausgezogen werden. Die Rotation kann über das Stellglied des Spannelementes einleitbar sein. Mit Vorteil ist die Rotationsrichtung entgegengesetzt der Spannrichtung des Stellgliedes, bzw. der Befestigungsrichtung des Befestigungselements.

Für eine kostengünstige Herstellung kann die Hohlwanddose einstückig, bzw. integral herstellbar sein. In einem initialen Zustand der Hohlwanddose vor der Montage, respektive nach der Herstellung, kann das mindestens eine Spannelement und/oder das mindestens eine Haltelement und/oder das Deformationselement (wenn vorhanden) integral mit dem Dosenkörper ausgebildet sein. Beispielsweise kann das Spannelement und/oder das mindestens eine Haltelement und/oder das Deformationselement über mindestens eine Trennstelle mit dem Dosenkörper wirkverbunden sein. Eine Anordnung der Trennstelle(n) in Bereichen aus einer harten Kunststoffkomponente empfehlenswert. Für eine gute Entformbarkeit bei einer Herstellung über ein Spitzgussverfahren kann das Spannelement in dem initialen Zustand winkelig von der Seitenwand des Dosenkörpers abstehen. Mit Vorteil ist der Winkel zwischen dem Spannelement und der Seitenwand des Dosenkörpers derart gewählt, dass die taschenartigen Vertiefungen des Spannelementes (wenn vorhanden) in eine Entformungsrichtung zeigen. Die Entformungsrichtung der Hohlwanddose ist in der Regel in axialer Richtung. Zur Montage des Spannelements kann die mindestens eine Trennstelle durchtrennt werden und das abgetrennte Spannelement in den montierten Zustand gebracht werden. Wenn ein Deformationselement vorhanden ist, kann das mindestens eine Spannelement und das Deformationselement in die Nut einführbar sein bis das Deformationselement, respektive der erste Wirkverbindungsbereich, mit dem Dosenkörper, respektive dem zweiten Wirkverbindungsbereich, verrastet.

In einer möglichen Variante der Erfindung ist das mindestens eine Spannelement an einer Innenseite der Seitenwand verschiebbar angeordnet. In diesem Fall kann die röhrenförmige Seitenwand einen sich in die axiale Richtung erstreckenden Spalt aufweisen, durch welchen sich in einem montierten Zustand des Spannelementes das mindestens eine Halteelement angeordnet auf dem Spannelement erstreckt. Die Linearführung kann bei dieser Ausgestaltung an der Innenseite der Seitenwand angeordnet sein. Beispielsweise kann der Spalt in der Seitenwand zwischen zwei Führungsschienen angeordnet sein. Auch in dieser Variante kann eine Nut an der Aussenseite angeordnet sein, an dessen Boden sich der Spalt erstreckt. Bei der Montage kann das mindestens eine Haltelement so in die Nut deformiert werden. Alternativ kann das Haltelement ebenfalls durch den Spalt deformiert werden. Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer erfindungsgemässen Hohlwanddose in einer perspektivischen Ansicht;
- Fig. 2: Die erste Variante der Hohlwanddose gemäss Figur 1 in einer Ansicht von der Seite;
- Fig. 3: Eine Variante eines Spannelementes der erfindungsgemässen Hohlwanddose in einer perspektivischen Ansicht;
- Fig. 4: Das Spannelement gemäss Figur 3 in einer Ansicht von der Seite;
- Fig. 5: Die erste Variante der Hohlwanddose gemäss Figur 1 in einer (schematischen) geschnittenen Ansicht mit und ohne Spannelement;
- Fig. 6: Eine Variante eines Spannelementes der erfindungsgemässen Hohlwanddose in einem initialen Zustand in einer perspektivischen Ansicht.

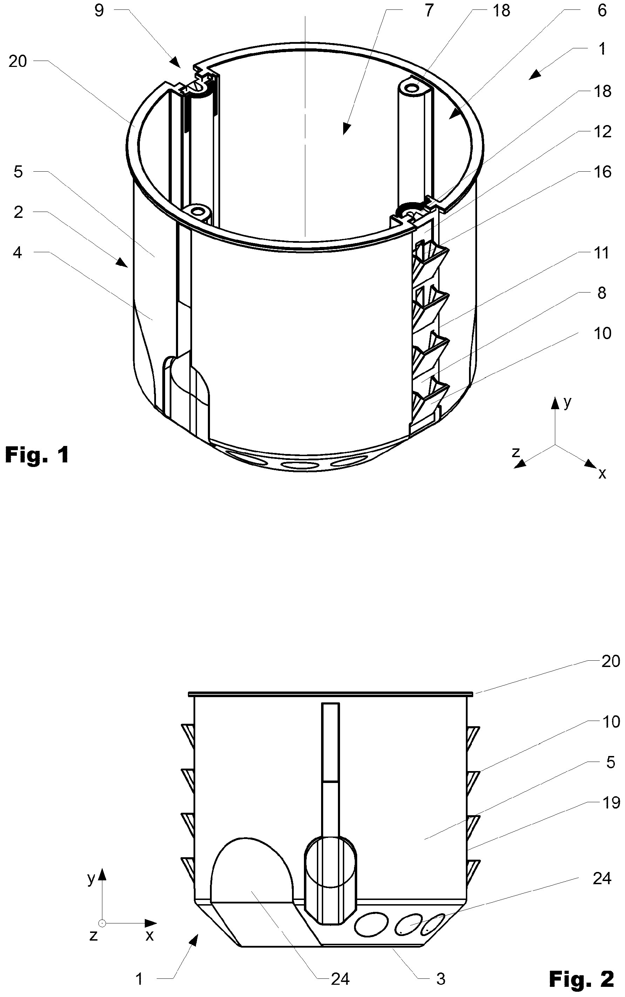

**Figur 1** und **Figur 2** zeigen eine erste Variante einer erfindungsgemässen Hohlwanddose 1. Die Hohlwanddose 1 umfasst einen Dosenkörper 2 mit einem Dosenboden 3 und einer in den Dosenboden 3 übergehende, sich in eine axiale Richtung (y-Richtung) erstreckende röhrenförmige Seitenwand 4, welche einen Installationsraum 7 bilden. Dem Dosenboden 3 gegenüberliegend und von der Seitenwand 4 umgeben ist eine Installationsöffnung 6. Die Hohlwanddose 1 umfasst weiter zwei gegenüberliegende Spannelemente 8, welche in je einer Nut 9 in der Aussenseite 5 der Seitenwand 4 angeordnet sind. Auf dem jeweiligen Spannelement 8 befinden sich mehrere darauf in axialer Richtung (y-Richtung) hintereinander angeordnete Halteelemente 10. Die Spannelemente 8 sind je in der Nut 9 mittels einer Linearführung 11 verschiebbar angeordnet. Die Spannelemente 8 sind jeweils über ein elastisch deformierbares Deformationselement 12 mit dem Dosenkörper 2 wirkverbunden. Das Deformationselement 12 ist mit einem ersten Wirkverbindungsbereich 13 mit dem Dosenkörper 2 wirkverbunden. Über das Deformationselement 12 kann das Spannelement 8 mit den darauf angeordneten Halteelementen 10 in Relation zu dem Dosenkörper 2 in der Nut 9 elastisch verschoben werden.

In der gezeigten Variante umfasst das Deformationselement 12 bereichsweise ein weichelastisches Kunststoffmaterial. Aus dem gleichen Material ist eine Membran 24, welche eine Einführöffnung des Dosenkörpers 2 abdeckt. Die Einführöffnung, respektive die nachträglich geöffnete Membran 24, kann zum Einführen von Elektroleitungen in den Installationsraum 7 dienen. Wie in **Figur 2** ersichtlich ist das Spannelement 8 im montierten Zustand in axialer Richtung innerhalb einer runden Montagekontur 19 angeordnet, welche von der röhrenförmigen Seitenwand 4 definiert ist. Nur die Halteelemente 10 ragen radial zumindest bereichsweise über die Montagekontur 19 hinaus. Die Halteelemente 10 sind jedoch, wie oben beschrieben, derart deformierbar, dass diese temporär in der Montagekontur 19 aufgenommen werden können.

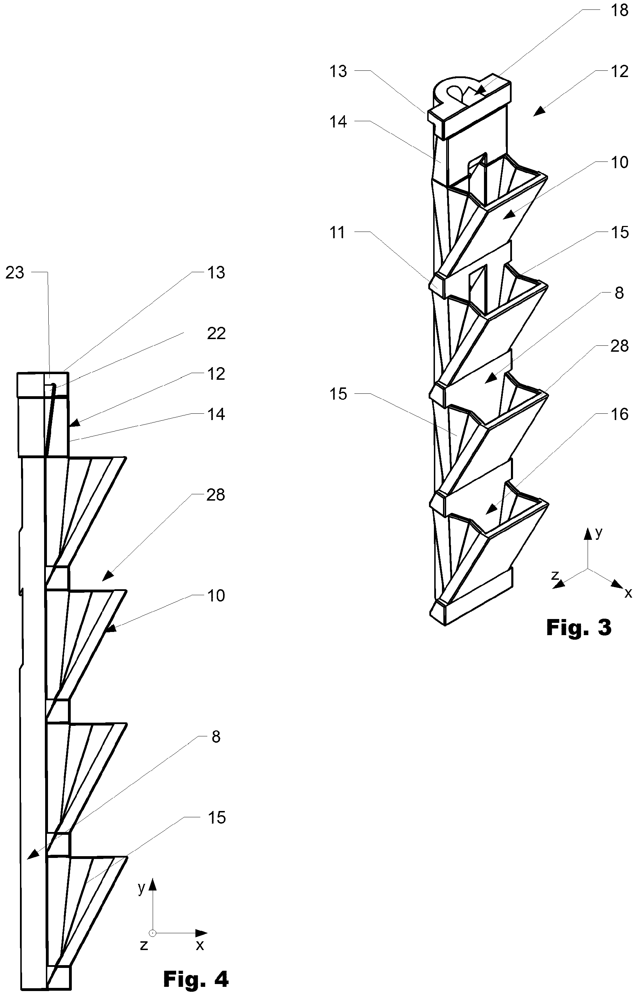

**Figur 3** und **Figur 4** zeigen das Spannelement 8 und das Deformationselement 12, welches an das Spannelement 8 angeformt sein kann. Das Deformationselement 12 umfasst einen ersten Wirkverbindungsbereich 13 aus einem harten Kunststoff zur Wirkverbindung mit dem Dosenkörper 2 und einen Deformationsbereich 14 aus weichelastischen Kunststoff. Die auf dem Spannelement 8 angeordneten Halteelemente 10 können ebenfalls den harten Kunststoff umfassen. Um dennoch eine Deformation der Halteelemente 10 zu ermöglichen, sind diese mit Vorteil dünnwandig ausgestaltet. Des Weiteren weisen die Halteelemente 10 jeweils mindestens ein, hier zwei gegenüberliegende, Gelenkbereiche 15 für die Deformation in die Montagekontur 19 auf. Die Gelenkbereiche 15 ermöglichen, dass eine taschenartige Vertiefung 16 eines Halteelementes 10, über die Gelenkbereiche 15 temporär während des Einbaus der Hohlwanddose 1 einklappbar, respektive deformierbar, ist. Die taschenartige Vertiefung 16 kann keilförmig sein. Eine Oberkante 28 eines Halteelements 10, respektive einer taschenartigen Vertiefung 16, bildet im montierten Zustand der Hohlwanddose 1 einen Hinterschnitt in die axiale Richtung mit der Hohlwand und fixiert die Hohlwanddose 1 in der Wandöffnung.

Im montierten Zustand an der Wandöffnung kann die Oberkante 28 an der Rückseite der Hohlwand anliegen. In der gezeigten Variante erstreckt sich eine Öffnung 18 in die axiale Richtung durch das Deformationselement 12 in das Spannelement 8. In der Öffnung 18 kann eine Schraube oder ähnliches eingebracht werden, welche einerseits als Stellglied für das Spannelement 8 und andererseits als Befestigungselement dienen kann.

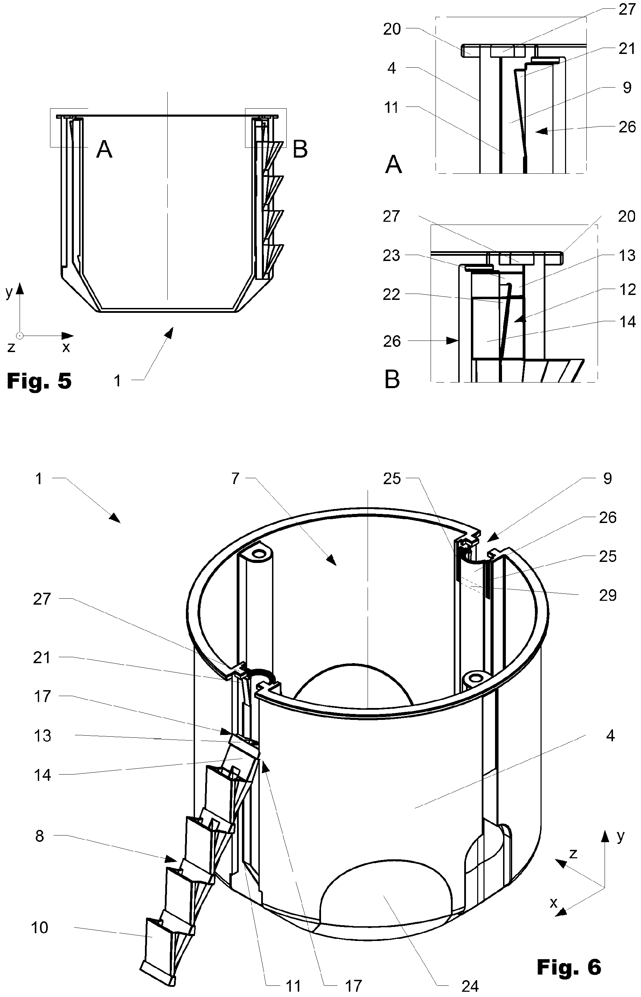

**Figur 5** zeigt eine schematische Schnittansicht der Hohlwanddose 1. Der Detailausschnitt A zeigt die Nut 9 in der Hohlwanddose 1 ohne Spannelement 8 und Deformationselement 12. Der Detailausschnitt B zeigt die Nut 9 mit montierten Spannelement 8 und Deformationselement 12. Im Detailausschnitt A ist erkennbar, dass an einem zweiten Wirkverbindungsbereich 26 des Dosenkörpers 2 in der Nut 9 eine Schulter 21 angeordnet ist. Des Weiteren weist die Nut 8 einen Anschlag 27 auf Höhe des Randes 20 auf, sodass ein Herausrutschen des Spannelementes 8 an dieser Seite vermieden werden kann. Im Detailausschnitt B ist ersichtlich, dass das Deformationselement 12 im ersten Wirkverbindungsbereich 13 eine Aussparung 22 aufweist, welche zu der Schulter 21 der Nut 9 korrespondiert. Im montierten Zustand des Spannelementes 8 und des Deformationselementes 12 in der Nut 9, sitzt die Schulter 21 der Nut 9 in der Aussparung 22 des Deformationselementes 12 und ein Absatz 23 des ersten Wirkverbindungsbereiches 13 bildet mit der Schulter 21 der Nut 9 einen Hinterschnitt in die axiale Richtung. Auf diese Weise wird der erste Wirkverbindungsbereich 13 in dem montierten Zustand unverschiebbar in der Nut 9 gehalten. Das über das Deformationselement 12 gehaltene Spannelement 8, respektive die Halteelemente 10, kann durch elastische Deformation des Deformationsbereiches 14 in der Nut 9 verschoben werden.

Zur Demontage der Hohlwanddose 1 aus der Wandöffnung kann der Hinterschnitt des ersten Wirkverbindungsbereichs 13 des Deformationselementes 12 mit dem zweiten Wirkverbindungsbereich 26 des Dosenkörpers 2 aufgelöst werden. Hierzu kann der zweite Wirkverbindungsbereich 26 in Relation zu dem Deformationselement 12, insbesondere dem ersten Wirkverbindungsbereich 13, verschiebbar ausgestaltet sein. Im gezeigten Fall wird dies durch zwei Schlitze 25 realisiert, welche seitlich neben dem Wirkverbindungsbereich 26 angeordnet sind (vergl. **Figur 6**). Die Schlitze 25 erlauben eine Auslenkung des zweiten Wirkverbindungsbereichs 26 über einen Verformungsbereich 29 angeordnet zwischen den Schlitzen 25 in Richtung des Installationsraumes 7, sodass die Wirkverbindung des ersten und des zweiten Wirkverbindungsbereiches 13, 26 aufgelöst wird. Die Hohlwanddose 1 kann dann problemlos aus der Wandöffnung herausgezogen werden. Ebenfalls denkbar ist das Abtrennen des zweiten Wirkverbindungsbereiches 26 über den Bereich 29.

**Figur 6** zeigt einen initialen Zustand der Hohlwanddose 1 nach der Herstellung bzw. vor der Montage der Spannelemente 8 in den Nuten 9. In diesem Zustand ist das mindestens eine Spannelement 8 und/oder das Deformationselement 12 integral mit dem Dosenkörper 2 über mindestens eine Trennstelle 17 verbunden. Die Trennstelle 17 verbindet mit Vorteil zwei Bereiche aus der harten Kunststoffkomponente. In der gezeigten Variante ist die Trennstelle 17 hierbei an dem ersten Wirkverbindungsbereich 13 des Deformationselementes 12 und dem Dosenkörper 2 angeordnet, jedoch sind ebenfalls andere Ausgestaltungen denkbar. Für eine gute Entformbarkeit bei einer Herstellung über ein Spitzgussverfahren steht das Spannelement 8 winkelig von der Seitenwand 4 ab. Der Winkel zwischen dem Spannelement 8 und der Seitenwand 4 des Dosenkörpers 2 ist vorteilhafterweise derart gewählt, dass die taschenartigen Vertiefungen 16 der Halteelemente 10 in eine Entformungsrichtung zeigen. Im gezeigten Fall ist die Entformungsrichtung in axialer Richtung (y-Richtung).

### LISTE DER BEZUGSZEICHEN

| | | | |
|---|---|---|---|
| 1 | Hohlwanddose | 17 | Trennstelle |
| 2 | Dosenkörper | 18 | Öffnung |
| 3 | Dosenboden | 19 | Montagekontur |
| 4 | Seitenwand | 20 | Rand |
| 5 | Aussenseite | 21 | Schulter |
| 6 | Installationsöffnung | 22 | Aussparung |
| 7 | Installationsraum | 23 | Absatz |
| 8 | Spannelement | 24 | Membran |
| 9 | Nut | 25 | Schlitz |
| 10 | Halteelemente | 26 | Zweiter Wirkverbindungsbereich |
| 11 | Linearführung | | |
| 12 | Deformationselement | 27 | Anschlag |
| 13 | Erster Wirkverbindungsbereich | 28 | Oberkante |
| | | 29 | Verformungsbereich |
| 14 | Deformationsbereich | | |
| 15 | Gelenkbereich | | |
| 16 | Taschen/Vertiefung | | |

## Patentansprüche

1. Hohlwanddose (1) für elektrotechnische Zwecke umfassend
a. einen Dosenkörper (2)
i. mit einem Dosenboden (3) und einer in den Dosenboden übergehenden, sich in eine axiale Richtung (y) erstreckenden röhrenförmigen Seitenwand (4), welche einen Installationsraum (7) bilden, wobei die Seitenwand eine Montagekontur definiert oder bildet,
ii. eine dem Dosenboden (3) gegenüberliegende und von der Seitenwand (4) umgebende Installationsöffnung (6), wobei
b. die Hohlwanddose (1) weiter mindestens ein Spannelement (8) umfasst, das in einem montierten Zustand des Spannelementes (8) an dem Dosenkörper (2) entlang der Seitenwand (4) in axialer Richtung (y) über ein Stellglied verschiebbar und innerhalb der Montagekontur der Hohlwanddose (1) angeordnet ist,
c. das mindestens eine Spannelement (8) eine Öffnung (18) in die axiale Richtung (y) für das Stellglied zum Spannen des Spannelementes (8) umfasst, und
d. auf dem Spannelement (8) mindestens ein Halteelement (10) zum Abstützen der Hohlwanddose (1) an einer Rückseite einer Hohlwand angeordnet ist, welches aus der Montagekontur radial herausragt und zumindest temporär in die Montagekontur deformierbar ist.

2. Hohlwanddose (1) gemäss Patentanspruch 1, **dadurch gekennzeichnet, dass** das mindestens eine Spannelement (8) in einer Nut (9) an einer Aussenseite (5) der Seitenwand (4) in axialer Richtung (y) verschiebbar angeordnet ist.

3. Hohlwanddose (1) gemäss einem der vorangehenden Patentansprüche, **dadurch gekennzeichnet, dass** das mindestens eine Spannelement (8) mittels einer Linearführung (11) verschiebbar angeordnet ist.

4. Hohlwanddose (1) gemäss einem der vorangehenden Patentansprüche, **dadurch gekennzeichnet, dass** das mindestens eine Halteelement (10) mindestens einen Gelenkbereich (15) aufweist.

5. Hohlwanddose (1) gemäss einem der vorangehenden Patentansprüche, **dadurch gekennzeichnet, dass** das mindestens eine Halteelement (10) eine taschenartige Vertiefung (16) aufweist.

6. Hohlwanddose (1) gemäss einem der vorangehenden Patentansprüche, **dadurch gekennzeichnet, dass** mehrere Halteelemente (10) in axialer Richtung (y) hintereinander auf dem mindestens einen Spannelement (8) angeordnet sind.

7. Hohlwanddose (1) gemäss einem der vorangehenden Patentansprüche, **dadurch gekennzeichnet, dass** das mindestens eine Spannelement (8) in dem montierten Zustand des Spannelementes (8) über ein Deformationselement (12) mit dem Dosenkörper (2) wirkverbunden ist.

8. Hohlwanddose (1) gemäss Patentanspruch 7, **dadurch gekennzeichnet, dass** sich die Öffnung (18) durch das Deformationselement (12) in das mindestens eine Spannelement (8) erstreckt.

9. Hohlwanddose (1) gemäss Patentanspruch 7 oder 8, **dadurch gekennzeichnet, dass** das Deformationselement (12) einen weichelastischen Kunststoff umfasst.

10. Hohlwanddose (1) gemäss einem der vorangehenden Patentansprüche, **dadurch gekennzeichnet, dass** der Dosenkörper (2) eine Membran (24) umfasst, welche eine Einführöffnung angeordnet im Dosenkörper (2) abdeckt und die Membran (24) einen weichelastischen Kunststoff umfasst.

11. Hohlwanddose (1) gemäss einem der vorangehenden Patentansprüche 8 bis **9, dadurch gekennzeichnet, dass** in dem montierten Zustand des mindestens einen Spannelementes (8) an dem Dosenkörper (2) das Deformationselement (12) lösbar mit dem Dosenkörper (2) wirkverbunden ist.

12. Hohlwanddose (1) gemäss einem der vorangehenden Patentansprüche, **dadurch gekennzeichnet, dass** das mindestens eine Spannelement (8) und vorzugsweise auch das mindestens eine Haltelement (10) in einem initialen Zustand vor der Montage integral mit dem Dosenkörper (2) ausgebildet ist.

13. Hohlwanddose (1) gemäss Patentanspruch 12, **dadurch gekennzeichnet, dass** das mindestens eine Spannelement (8) in dem initialen Zustand über eine Trennstelle (17) mit dem Dosenkörper (2) wirkverbunden ist.

14. Hohlwanddose (1) gemäss einem der vorangehenden Patentansprüche 12 oder 13, **dadurch gekennzeichnet, dass** in dem initialen Zustand das mindestens eine Spannelement (8) winkelig von der Seitenwand (4) absteht.

15. Hohlwanddose (1) gemäss Patentanspruch 5 und 14, **dadurch gekennzeichnet, dass** sich die taschenartige Vertiefung (16) in dem initialen Zustand in die axiale Richtung (y) erstreckt.

16. Hohlwanddose (1) gemäss einem der vorangehenden Patentansprüche, **dadurch gekennzeichnet, dass** das mindestens eine Spannelement (8) um eine Rotationsachse rotierbar ist, sodass das mindestens eine Halteelement (10) in einem rotierten Zustand des Spannelements (8) innerhalb einer Montagekontur (19) des Dosenkörpers (2) angeordnet ist.

## Claims

1. Hollow wall box (1) for electrical engineering purposes, comprising
a. a box body (2)
i. with a box base (3) and a tube-shaped side wall (4) merging into the box base and extending in an axial direction (y), which form an installation space (7), wherein the side wall defines or forms a mounting contour,
ii. an installation opening (6) opposite the box base (3) and surrounded by the side wall (4),
wherein
b. the hollow wall box (1) further comprises at least one clamping element (8) which, in an assembled state of the clamping element (8), is arranged on the box body (2) along the side wall (4) in the axial direction (y) displaceable via an adjusting member and within the mounting contour of the hollow wall box (1),
c. the at least one clamping element (8) comprises an opening (18) in the axial direction (y) for the adjusting member for clamping the clamping element (8), and
d. at least one retaining element (10) arranged on the clamping element (8) for supporting the hollow wall box (1) on a rear side of a hollow wall, which protrudes radially from the mounting contour and is at least temporarily deformable into the mounting contour.

2. Hollow wall box (1) according to patent claim 1, **characterized in that** the at least one clamping element (8) is arranged displaceable in an axial direction (y) in a groove (9) on an outer side (5) of the side wall (4).

3. Hollow wall box(1) according to one of the preceding patent claims, **characterized in that** the at least one clamping element (8) is arranged displaceable by means of a linear guide (11).

4. Hollow wall box(1) according to one of the preceding patent claims, **characterized in that** the at least one retaining element (10) has at least one joint region (15).

5. Hollow wall box (1) according to one of the preceding patent claims, **characterized in that** the at least one retaining element (10) has a pocket-like recess (16).

6. Hollow wall box (1) according to one of the preceding patent claims, **characterized in that** a plurality of retaining elements (10) are arranged one behind the other in the axial direction (y) on the at least one clamping element (8).

7. Hollow wall box (1) according to one of the preceding patent claims, **characterized in that** in the assembled state of the clamping element (8), the at least one clamping element (8) is interconnected with the box body (2) via a deformation element (12).

8. Hollow wall box (1) according to claim 7, **characterized in that** the opening (18) extends through the deformation element (12) into the at least one clamping element (8).

9. Hollow wall box (1) according to claim 7 or 8, **characterized in that** the deformation element (12) comprises a soft elastic plastic.

10. Hollow wall box(1) according to one of the preceding patent claims, **characterized in that** the box body (2) comprises a membrane (24) which covers an insertion opening arranged in the box body (2) and the membrane (24) comprises a soft elastic plastic.

11. Hollow wall box (1) according to one of the preceding patent claims 8 to 9, **characterized in that,** in the assembled state of the at least one clamping element (8) on the box body (2), the deformation element (12) is detachably interconnected to the box body (2).

12. Hollow wall box(1) according to one of the preceding patent claims, **characterized in that** the at least one clamping element (8) and, preferably, also the at least one retaining element (10) are integrally designed with the box body (2) in an initial state prior to assembly.

13. Hollow wall box (1) according to patent claim 12, **characterized in that** in the initial state, the at least one clamping element (8) is interconnected with the box body (2) via a separating point (17).

14. Hollow wall box (1) according to one of the preceding patent claims 12 or 13, **characterized in that,** in the initial state, the at least one clamping element (8) protrudes at an angle from the side wall (4).

15. Hollow wall box (1) according to patent claims 5 and 14, **characterized in that** in the initial state, the pocket-like recess (16) extends in the axial direction (y).

16. Hollow wall box (1) according to one of the preceding patent claims, **characterized in that** the at least one clamping element (8) is rotateable about an axis of rotation, such that in a rotated state of the clamping element (8), the at least one retaining element (10) is arranged within a mounting contour (19) of the box body (2).

## Revendications

1. Boîte pour murs creux (1) à usage électrotechnique, comprenant
a. un corps du boîtier (2)
i. avec un bas de boîte (3) et une paroi latérale tubulaire (4) se prolongeant dans le bas de boîte et s'étendant dans une direction axiale (y), qui forment un espace d'installation (7), la paroi latérale définissant ou formant une contour de montage,
ii. une ouverture de montage (6) opposée au bas de boîte (3) et entourée par la paroi latérale (4),
dans lequel
b. la boîte pour murs creux (1) comprend en outre au moins un élément de serrage (8) qui, dans un état monté de l'élément de serrage (8), est disposé déplaçable dans le sens axial (y) le long de la paroi latérale (4) sur le corps du boîtier (2) via un élément de réglage et à l'intérieur du contour de montage de la boîte pour murs creux (1 )
c. le au moins un élément de serrage (8) comprend une ouverture (18) dans la direction axiale (y) pour l'élément de réglage afin de serrer l'élément de serrage (8), et
d. au moins un élément de retenue (10) est arrangé sur l'élément de serrage (8) pour soutenir la boîte pour murs creux (1) sur une face arrière d'un mur creux, lequel élément de retenue dépasse radialement du contour de montage et est déformable au moins temporairement dans le contour de montage.

2. Boîte pour murs creux (1) selon la revendication 1, **caractérisé en ce que** le ou les éléments de serrage (8) sont arrangés déplaçables dans le sens axial (y) dans une rainure (9) sur un côté extérieur (5) de la paroi latérale (4).

3. Boîte pour murs creux (1) selon l'une des revendications précédentes, **caractérisée en ce que** le au moins un élément de serrage (8) est disposé déplaçable au moyen d'un guidage linéaire (11).

4. Boîte pour murs creux (1) selon l'une des revendications précédentes, **caractérisée en ce que** le au moins un élément de retenue (10) présente au moins une zone d'articulation (15).

5. Boîte pour murs creux (1) selon l'une des revendications précédentes, **caractérisée en ce que** le au moins un élément de retenue (10) présente un renfoncement en forme de poche (16).

6. Boîte pour murs creux (1) selon l'une des revendications précédentes, **caractérisée en ce que** plusieurs éléments de retenue (10) sont arrangés les uns derrière les autres dans la direction axiale (y) sur au moins un élément de serrage (8).

7. Boîte pour murs creux (1) selon l'une des revendications précédentes, **caractérisée en ce que** le au moins un élément de serrage (8) est, à l'état monté de l'élément de serrage (8), interconnecté avec le corps de boîte (2) par l'intermédiaire d'un élément de déformation (12).

8. Boîte pour murs creux (1) selon la revendication 7, **caractérisée en ce que** l'ouverture (18) s'étend à travers l'élément de déformation (12) dans au moins un élément de serrage (8).

9. Boîte pour murs creux (1) selon la revendication 7 ou 8, **caractérisée en ce que** l'élément de déformation (12) comprend une matière plastique souple et élastique.

10. Boîte pour murs creux (1) selon l'une des revendications précédentes, **caractérisée en ce que** le corps du boîtier (2) comprend une membrane (24) qui recouvre une ouverture d'introduction disposée dans le corps du boîtier (2) et en la membrane (24) comprend une matière plastique souple et élastique.

11. Boîte pour murs creux (1) selon l'une des revendications 8 à 9 précédentes, **caractérisée en ce que,** à l'état monté du au moins un élément de serrage (8) sur le corps de boîtier (2), l'élément de déformation (12) est interconnecté de manière amovible avec le corps de boîtier (2).

12. Boîte pour murs creux (1) selon l'une des revendications précédentes, **caractérisée en ce que** le au moins un élément de serrage (8) et, de préférence, également le au moins un élément de retenue (10) dans un état initial avant le montage sont formés intégralement avec le corps du boîtier (2).

13. Boîte pour murs creux (1) selon la revendication 12, **caractérisée en ce que** le au moins un élément de serrage (8) dans l'état initial est interconnecté avec le corps de boîte (2) via un point de séparation (17).

14. Boîte pour murs creux (1) selon l'une des revendications 12 ou 13 précédentes, **caractérisée en ce que,** dans l'état initial, le au moins un élément de serrage (8) dépasse angulairement de la paroi latérale (4).

15. Boîte pour murs creux (1) selon les revendications 5 et 14, **caractérisée en ce que** le renfoncement en forme de poche (16) dans l'état initial s'étend dans la direction axiale (y).

16. Boîte pour murs creux (1) selon l'une des revendications précédentes, **caractérisée en ce que** le au moins un élément de serrage (8) est rotatif autour d'un axe de rotation, de sorte que le au moins un élément de retenue (10) dans un état rotatif de l'élément de serrage (8) est disposé à l'intérieur d'un contour de montage (19) du corps du boîtier (2).
